# DEMANDE DE BREVET EUROPEEN

(11) **EP 2 957 369 A1**
(43) Date de publication de la demande: **23.12.2015**
(21) Numéro de dépôt: 15171020.9
(22) Date de dépôt: 08.06.2015
(51) Int. Cl.: B23B 31/107, B25D 16/00, B25D 17/06, B25D 11/02, B25D 17/08, B25H 7/00, B25F 5/02

(54) **MACHINE DE PERÇAGE**

(30) Priorité: 19.06.2014 FR 1455647
(71) Demandeur: Castorama France, 59175 Templemars (FR)
(72) Inventeur: Le Clainche, Hoelig, 56170 Quiberon (FR)
(74) Mandataire: Cabinet Plasseraud

(57) **Abrégé**

Une machine de perçage (1) comprend une interface utilisateur (18) qui permet à l'utilisateur de déverrouiller un foret (2) monté sur un porte-outil (7) de ladite machine. L'interface utilisateur est bloquée en rotation par rapport à un boîtier (5) de la machine de perçage. Une telle interface utilisateur est compatible avec un fonctionnement de la machine de perçage en percussion, y compris un fonctionnement dans lequel le porte-outil est déplacé avec le foret par translation parallèlement à l'axe de rotation (X) dudit foret. L'interface utilisateur peut être facilement équipée d'unité d'éclairage (18c), de capteurs, ou d'afficheurs de données relatives au fonctionnement de la machine.

## Description

La présente invention concerne une machine de perçage qui est adaptée pour mettre en rotation un foret et déplacer simultanément le foret parallèlement à un axe de la rotation. Elle est particulièrement adaptée pour une telle machine du type perceuse à percussion ou perforateur.

De façon connue, pour un perforateur, la composante de translation du mouvement du foret est produite par la motorisation de la machine de perçage, en plus de la rotation du foret. A l'inverse, pour une perceuse à percussion, la composante de translation du mouvement du foret résulte d'une combinaison de la rotation qui est produite par la motorisation, avec la force d'appui qui est exercée par l'utilisateur sur le foret lors du perçage. Pour cela, une perceuse en percussion comporte un système à cames qui convertit une partie de l'énergie de rotation en énergie de translation du foret.

Une telle machine de perçage comprend usuellement un boîtier, un mécanisme d'entraînement en rotation, un porte-outil qui est adapté pour transmettre au foret au moins la rotation produite par le mécanisme d'entraînement, une interface utilisateur, et un mécanisme de liaison qui est adapté pour retenir l'interface utilisateur sur le boîtier.

Le porte-outil comprend lui-même un organe d'arrêt qui est mobile réversiblement et axialement par rapport au porte-outil entre une position de verrouillage du foret dans laquelle le foret ne peut pas être extrait du porte-outil, et une position de déverrouillage dans laquelle le foret peut être extrait du porte-outil, la position de verrouillage étant décalée en direction de la pointe du foret par rapport à la position de déverrouillage.

L'interface utilisateur est mobile en translation par rapport au boîtier parallèlement à l'axe de rotation, et agencée pour déplacer l'organe d'arrêt à partir de la position de verrouillage vers la position de déverrouillage. Ainsi, un utilisateur de la machine de perçage peut monter ou démonter le foret en actionnant l'interface utilisateur.

Toutefois, dans les machines de perçage connues du type rappelé ci-dessus, l'interface utilisateur est libre en rotation par rapport au boîtier, en plus de sa possibilité d'être déplacée par translation. Elle est alors plus ou moins entraînée en rotation par le foret ou par le porte-outil, ou par des vibrations de l'ensemble de la machine lors d'une utilisation, ou encore par un frottement entre cette interface utilisateur et des parties tournantes de la machine de perçage. Il s'en suit que cette interface utilisateur est inappropriée pour participer au maintien de la machine par l'utilisateur lors d'une opération de perçage.

En outre, les mouvements de rotation de l'interface utilisateur par rapport au boîtier rendent complexes la réalisation d'éventuelles connexions électriques entre des éléments fonctionnels qui seraient portés par cette interface d'utilisateur et des éléments fixes par rapport au boîtier, tels que des unités de contrôle et d'alimentation électrique.

La présente invention alors pour but de réduire l'un au moins de ces deux inconvénients, et/ou d'apporter d'autres améliorations par rapport aux machines existantes, notamment en termes de sécurité, d'ergonomie et de confort d'utilisation.

Pour cela, la présente invention propose une machine de perçage du type rappelé ci-dessus, dans laquelle le mécanisme de liaison qui retient l'interface utilisateur sur le boîtier est adapté pour empêcher un entraînement en rotation de cette interface utilisateur par le foret ou le porte-outil, ou par toute autre partie de la machine qui est en rotation. En outre, ce mécanisme de liaison est adapté pour maintenir l'interface utilisateur à distance de l'organe d'arrêt dans la position de verrouillage, le long de l'axe de rotation en direction de la pointe du foret monté sur le porte-outil, en permanence pendant un fonctionnement de la machine de perçage mettant en oeuvre la rotation du foret, la translation du foret, ou simultanément la rotation et la translation du foret. De cette façon, aucun frottement ne se produit entre l'organe d'arrêt et l'interface utilisateur pendant l'utilisation de la machine, qui serait susceptible de provoquer une usure de l'un de ces deux composants.

L'invention peut être avantageusement appliquée à une machine de perçage portative, notamment à une perceuse à percussion, un perforateur, une visseuse, ou un outil qui combine aux moins deux fonctions quelconques sélectionnées parmi visseuse, perceuse sans percussion, perceuse à percussion et perforateur.

Avantageusement, le mécanisme de liaison qui retient l'interface utilisateur sur le boîtier peut comprendre un moyen élastique de rappel qui est disposé pour maintenir réversiblement l'interface utilisateur dans une position de travail à distance de l'organe d'arrêt dans la position de verrouillage, le long de l'axe de rotation en direction de la pointe du foret monté sur le porte-outil, en permanence pendant le fonctionnement de la machine de perçage mettant en oeuvre la rotation du foret, la translation du foret, ou simultanément la rotation et la translation du foret. L'action de l'utilisateur pour monter ou démonter le foret du porte-outil consiste alors simplement à presser sur l'interface utilisateur à l'encontre du moyen élastique, pendant qu'il enfonce ou bien retire le foret.

L'invention est particulièrement avantageuse pour une machine de perçage dans laquelle, pendant un fonctionnement qui met en oeuvre la translation du foret, un mouvement du porte-outil par rapport au boîtier comprend une composante de mouvement par translation parallèlement à l'axe de rotation, et dans laquelle le porte-outil transmet au moins en partie la composante de mouvement par translation au foret. En effet, le maintien de l'interface utilisateur à distance de l'organe d'arrêt dans la position de verrouillage, le long de l'axe de rotation, empêche que l'organe d'arrêt entraîné par le porte-outil ne percute l'interface utilisateur. Ainsi, aucune libération du foret ne peut survenir involontairement pendant le fonctionnement de la machine de perçage, même lorsque ce fonctionnement produit un déplacement axial par translation du porte-outil et de l'organe d'arrêt par rapport à l'interface utilisateur. En outre, lorsque le porte-outil se déplace le long de l'axe de rotation entre une position de retrait et une position d'avancée maximale en direction de la pointe du foret, lors du fonctionnement de la machine de perçage qui met en oeuvre la translation du foret, le mécanisme de liaison qui retient l'interface utilisateur sur le boîtier est préférablement adapté pour maintenir un écart d'au moins 0,1 mm le long de l'axe de rotation, entre l'organe d'arrêt dans la position de verrouillage lorsque le porte-outil est dans la position d'avancée maximale, et l'interface utilisateur restant dans une position de travail. Cette valeur d'écart minimale est suffisante pour assurer qu'aucune libération involontaire du foret ne se produise, sans augmenter l'encombrement de la machine de perçage.

Avantageusement, l'interface utilisateur peut posséder une forme de coiffe et être disposée en avant du boîtier, en entourant au moins partiellement le foret monté sur le porte-outil.

Dans des perfectionnements d'une machine de perçage selon l'invention, l'interface utilisateur peut comprendre un ensemble de base qui participe au mécanisme qui la retient au boîtier, et comprendre aussi des éléments fonctionnels qui sont portés par cet ensemble de base. De tels éléments fonctionnels peuvent être des unités d'éclairage, des capteurs et/ou des unités d'affichage dédiés à communiquer à l'utilisateur de la machine de perçage des données relatives à son fonctionnement, à la position ou l'orientation du foret par rapport à la surface du matériau qui est en train d'être percé, et/ou à des éléments présents dans le matériau percé ou destiné à être percé. En particulier, certains des éléments fonctionnels peuvent comprendre au moins une diode électroluminescente pour produire un faisceau d'éclairage en direction de la pointe du foret monté sur le porte-outil. Dans ce cas, l'interface utilisateur peut comprendre en outre au moins une lentille divergente, notamment du type lentille de Fresnel, qui est adaptée pour modifier une forme du faisceau d'éclairage produit par la diode électroluminescente. Lorsque l'interface d'utilisateur est ainsi pourvue d'éléments fonctionnels, ceux-ci peuvent être connectés par des liaisons électriques déformables, par exemple par des fils électriques souples, à une unité de contrôle et d'alimentation électrique qui est fixe par rapport au boîtier. De telles liaisons électriques sont rendues facilement réalisables grâce à l'absence de rotation de l'interface utilisateur par rapport au boîtier.

D'autres particularités et avantages de la présente invention apparaîtront dans la description ci-après d'exemples de réalisation non limitatifs, en référence aux dessins annexés, dans lesquels :
- la figure 1 est une vue générale d'un perforateur équipé d'un foret ;
- la figure 2 est une vue de dessus du perforateur de la figure1 ;
- la figure 3 est une vue en coupe du perforateur selon l'axe III-III indiqué sur la figure 2 ;
- la figure 4 est une vue en coupe d'un mécanisme de perforation selon la vue de la figure 3, comprenant un élément de verrouillage en position de maintien du foret ;
- la figure 5 est une vue en coupe du mécanisme de perforation selon la vue de la figure 3, comprenant un élément de verrouillage en position de libération du foret ;
- la figure 6 est une vue en coupe du mécanisme de perforation selon la vue de la figure 4, avec le percuteur en position de retrait ;
- la figure 7 est une vue en coupe du mécanisme de perforation selon la vue de la figure 4, comprenant un percuteur en position de frappe ;
- les figures 8a à 8c sont des schémas de principe d'un mécanisme de perforation pour perforateur conforme à l'invention, respectivement avec la fonction de perçage sans percussion (figure 8a), et avec les fonctions de perçage et de percussion simultanées pour le percuteur en position de retrait (figure 8b) et en position de frappe (figure 8c) ;
- la figure 9 est une vue en perspective d'une partie centrale d'interface utilisateur qui peut être utilisée dans un perforateur conforme à l'invention,
- la figure 10 est une vue en coupe d'une autre machine de perçage conforme à l'invention, dans laquelle des variantes de réalisation sont mises en oeuvre.

Pour raison de clarté, les dimensions des éléments qui sont représentés dans ces figures ne correspondent ni à des dimensions réelles ni à des rapports de dimensions réels. En outre, des références identiques qui sont indiquées dans des figures différentes désignent des éléments identiques ou qui ont des fonctions identiques.

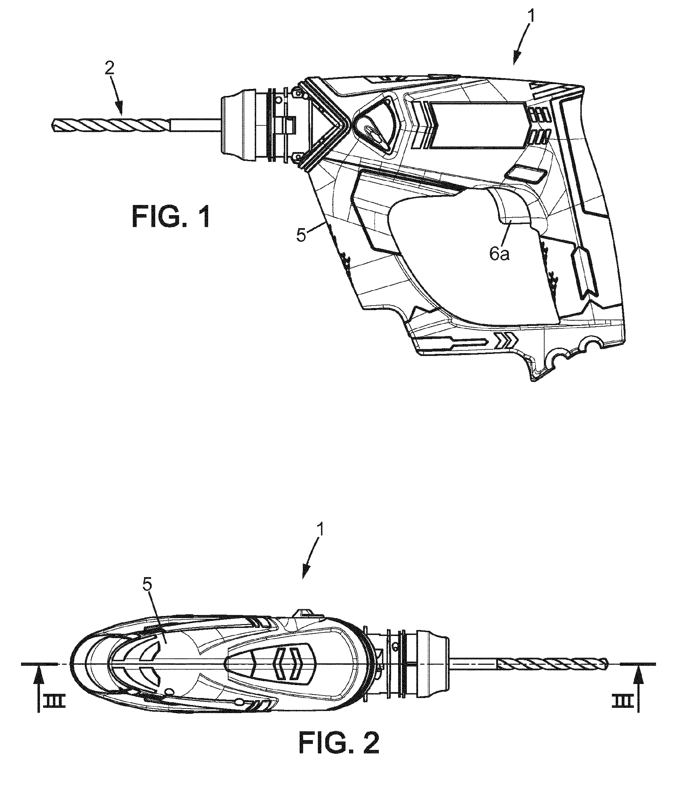

Les figures 1 à 7 sont relatives à un perforateur tel que connu avant la présente invention. Elles sont fournies en support de la description des composants et du fonctionnement d'un perforateur auquel la présente invention peut être appliquée.

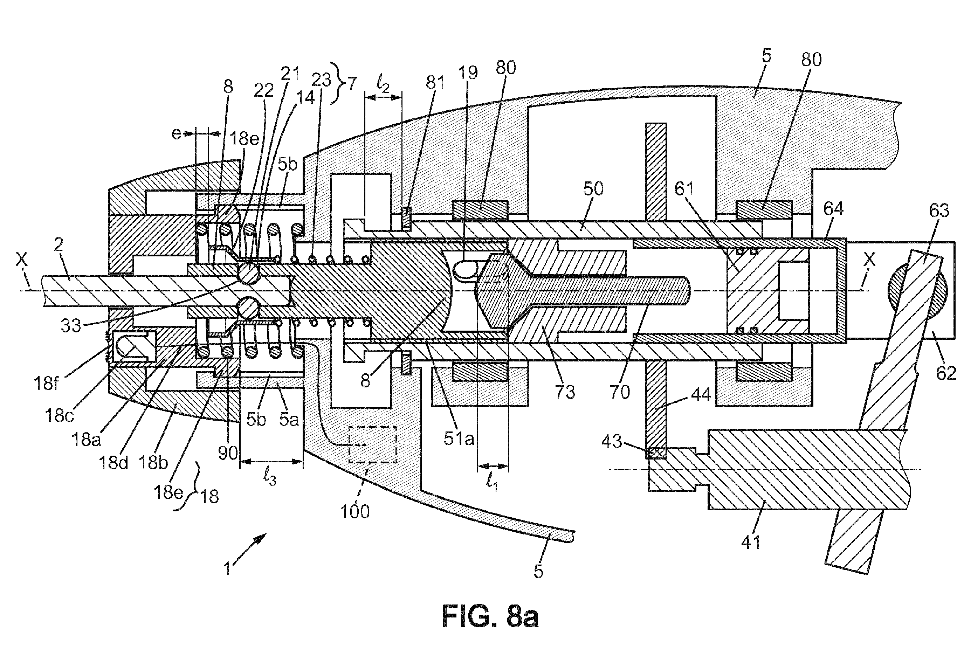

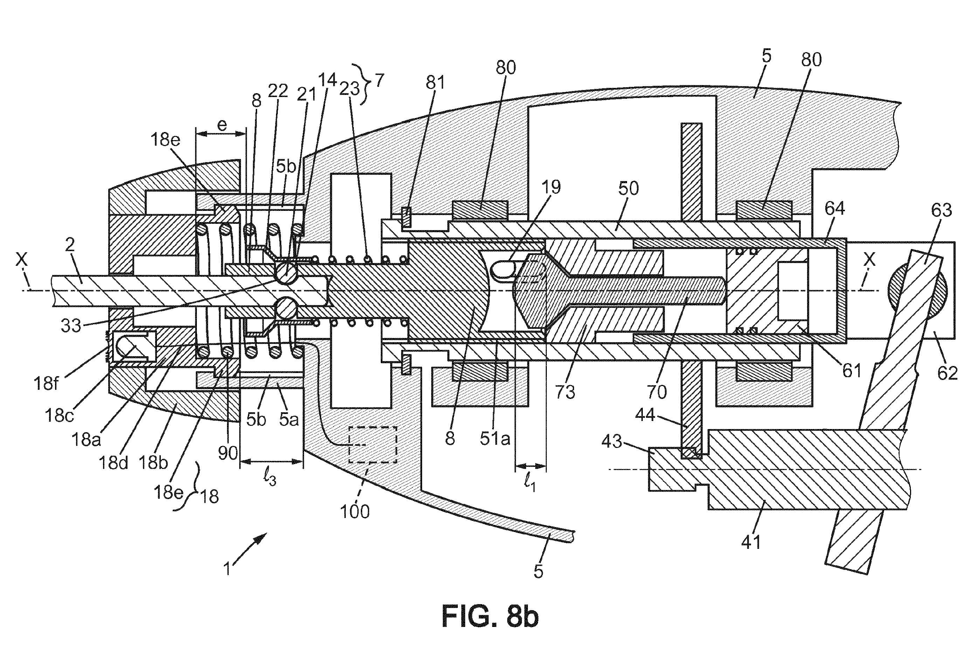

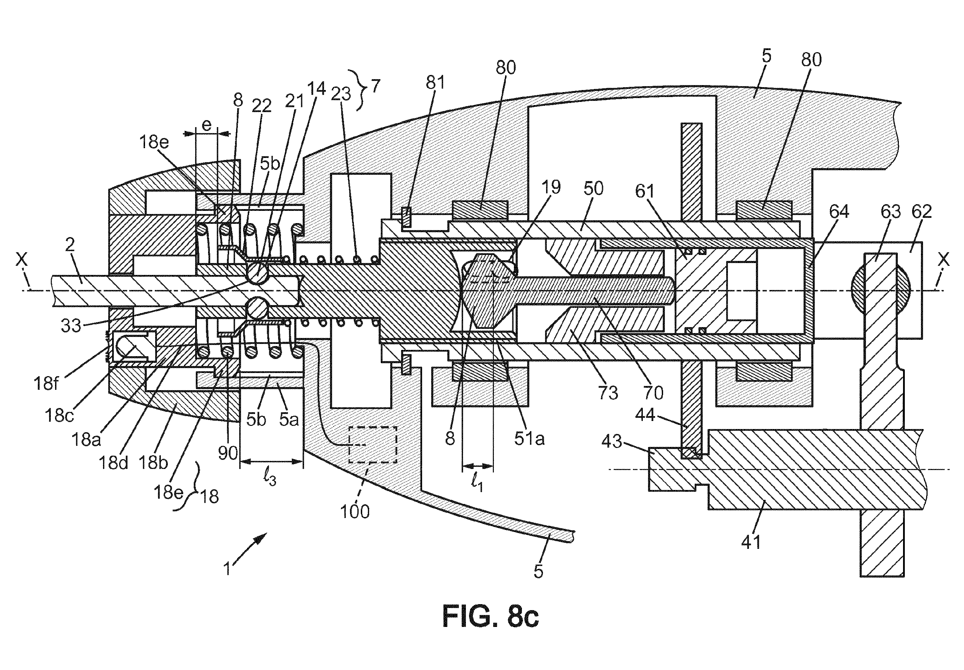

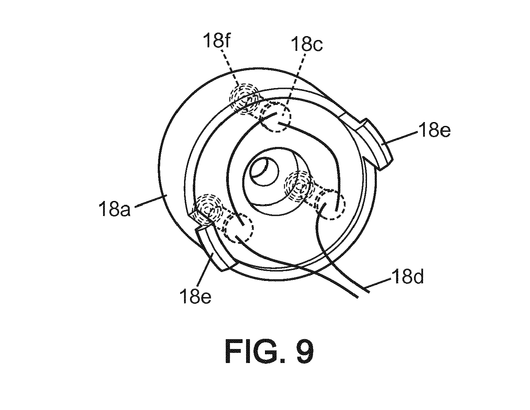

Les figures 8 et 9 illustrent les modifications du perforateur des figures 1 à 7, qui sont introduites par l'invention.

Ainsi, la figure 1 représente une vue générale d'une machine de perçage 1 portative, de type perforateur. Le perforateur 1 permet de percer des matériaux céramiques ou composites, tels qu'un bloc de béton ou de pierre par exemple, avec un outil, tel qu'un foret 2 par exemple, en produisant une force de perforation qui est indépendante de l'effort qui est appliqué sur la zone à percer par un utilisateur de la machine de perçage. Le perforateur 1 varie entre une position d'arrêt, dans laquelle le perforateur 1 ne reçoit pas d'électricité et est au repos, et une position de marche, dans laquelle le perforateur 1 est alimenté électriquement par pression de la part de l'utilisateur sur un bouton déclencheur 6a. Le perforateur 1 peut être multifonction et posséder, en outre, au moins un mode de vissage ou un mode de perçage.

Le foret 2 comprend une première portion pleine, encore appelée tige 3 ou queue, et une deuxième portion 4, généralement de forme hélicoïdale et équipée de plaquettes à son extrémité perforatrice, destinée à venir en contact avec le matériau à percer. La tige 3 du foret 2 peut être, par exemple, à section transversale hexagonale. La tige 3 comprend en outre au moins une gorge 33 qui s'étend le long de la circonférence de la tige 3 et est axialement restreinte. En outre, la gorge 33 est située à proximité d'une extrémité arrière 3a de la tige 3.

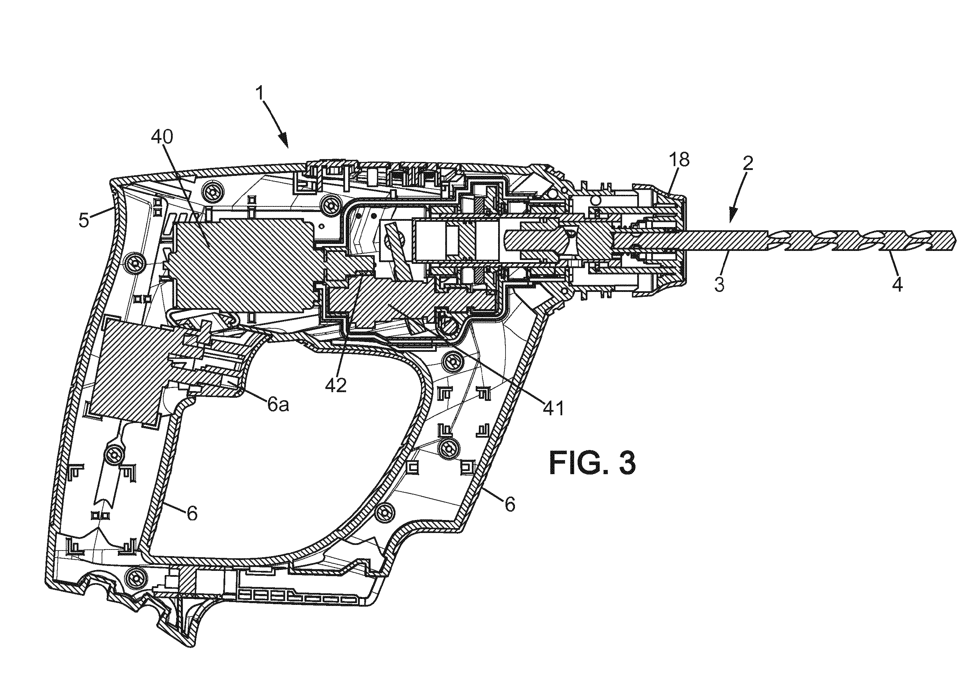

Le perforateur 1 comprend une coque de protection 5, ou boîtier. La coque de protection peut comprendre deux demi-coques qui s'opposent l'une à l'autre pour maintenir l'ensemble des composants de mécanisme internes qui constituent le perforateur 1. La coque de protection 5 permet en outre de faire barrière entre ces composants de mécanisme interne du perforateur 1 et un utilisateur. La coque de protection 5 comprend en outre une poigné 6 (figure 3), ou alternativement une double poignée 6, qui est destinée à être tenue par l'utilisateur.

Le perforateur 1 comprend en outre un porte-outil 7, qui permet alternativement de fixer le foret 2 sur le corps du perforateur 1, ou de séparer le foret 2 du corps du perforateur 1. En position de maintien du foret 2 sur le corps du perforateur 1, le foret 2 est maintenu solidairement en rotation et en translation au porte-outil 7. Pour cela, le porte-outil 7 comprend un dispositif de maintien 7a et un dispositif de verrouillage 7b qui seront décrits ultérieurement.

Le perforateur 1 comprend en outre un joint d'étanchéité 38, un moteur 40, un manchon 50, un mécanisme d'entrainement en rotation 41, un système de transmission de frappe 60 et un percuteur 70.

Le moteur 40 est situé à l'arrière du perforateur 1. Lorsque le moteur 40 est alimenté en électricité, il génère en sortie un mouvement de rotation. Le moteur 40 peut être alimenté en électricité proportionnellement à la course du bouton déclencheur 6a lorsque ce bouton déclencheur 6a est enfoncé par l'utilisateur sur la poignée 6. Le mouvement de rotation produit par le moteur 40 est transmis au mécanisme d'entrainement en rotation 41, par exemple, par l'intermédiaire d'un premier engrenage 42.

Le joint d'étanchéité 38 s'étend du moteur 40 jusqu'au porte-outil 7 et est, par exemple, en caoutchouc. Ce joint d'étanchéité 38 définit une zone qui contient un ensemble de composants transformant le mouvement de rotation du moteur 40 en un mouvement de rotation et percussion. Dans l'exemple considéré, ces composants sont le manchon 50, le mécanisme d'entrainement en rotation 41, le système de transmission de frappe 60 et le percuteur 70.

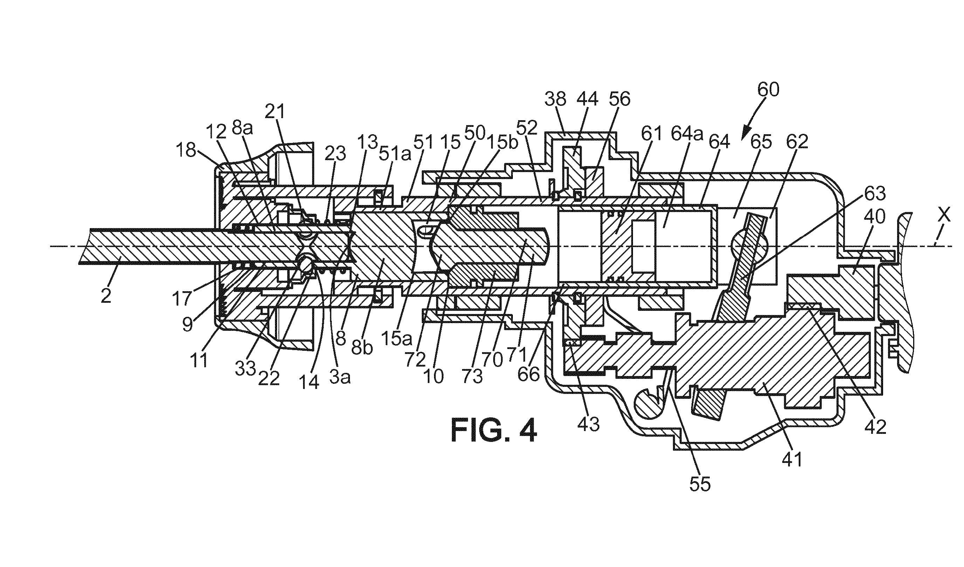

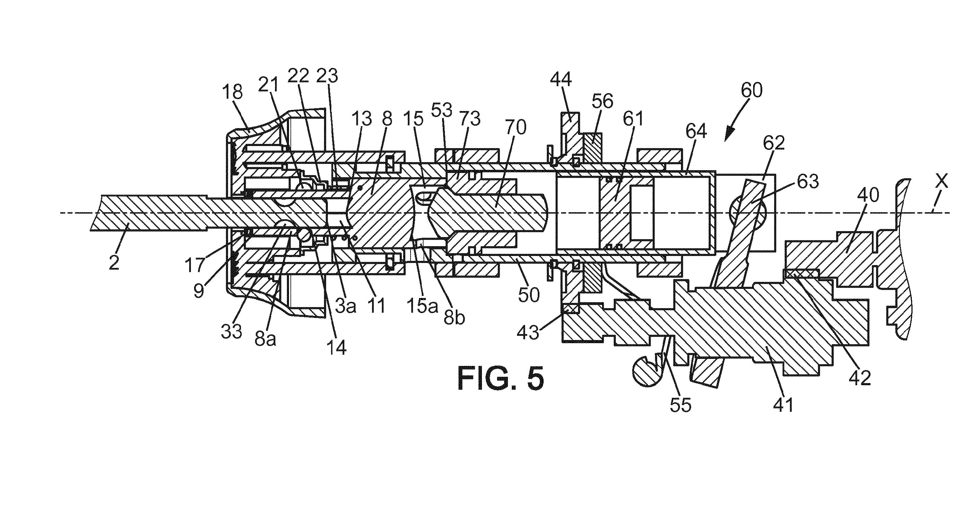

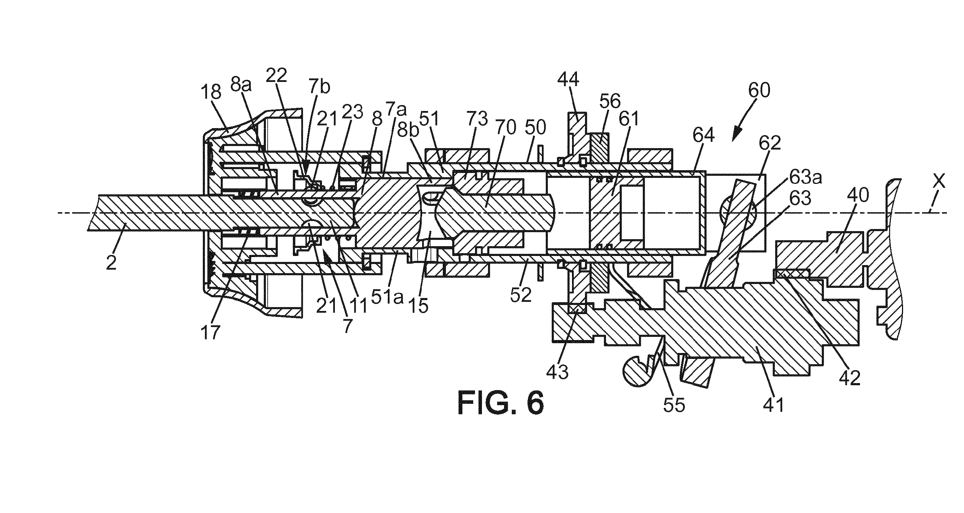

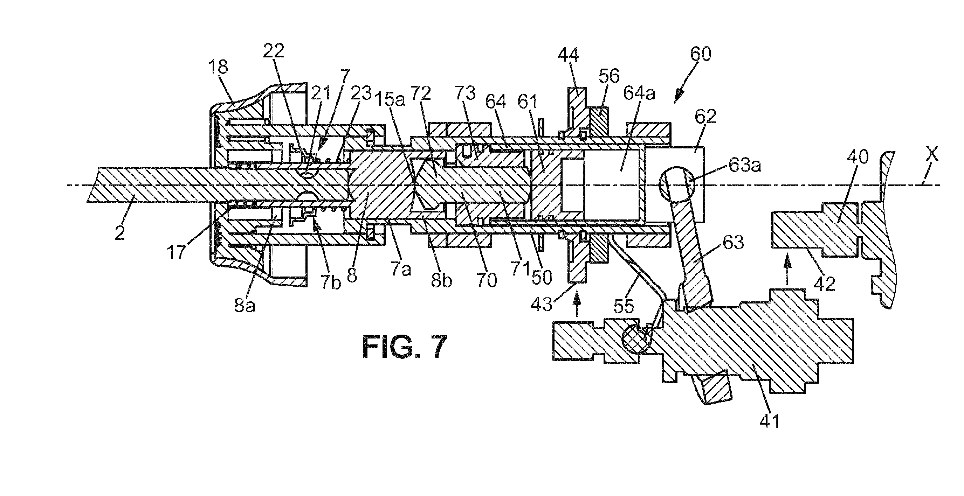

Le manchon 50 est sensiblement en forme de cylindre creux de diamètre d₆. Lorsque le perforateur 1 est en position de marche, le manchon 50 est mobile en rotation autour d'un axe X. Le manchon 50 permet de transmettre le mouvement de rotation autour de l'axe X à une bague de maintien 8 qui est partie du dispositif de maintien 7a. Le manchon 50 est en outre mobile axialement selon l'axe X entre une position de non-percussion (figures 4 et 5) et une position de percussion (figures 6 et 7) dans laquelle le manchon 50 permet au système de transmission de frappe 60 de transmettre la frappe au percuteur 70. Le manchon 50 est sollicité élastiquement par un moyen élastique de rappel 55, tel que par exemple un ressort à lame 55, vers sa position de non-perforation par l'intermédiaire d'une butée 56. La butée 56 est insérée sur le manchon 50 et comprend un évidement central (non représenté) qui est sensiblement égal au diamètre d₆ du manchon 50. La butée 56 est solidaire en translation du manchon 50.

Le manchon 50 comprend une première partie 51 antérieure et une deuxième partie 52 postérieure. La première partie 51 comprend, par exemple, des ailettes 51 a (figure 4) de transmission de couple s'étendant selon l'axe X. Les ailettes 51 a sont destinées à transmettre le mouvement de rotation selon l'axe X du manchon 50 à la bague de maintien 8. Pour cela, la première partie 51 contient une deuxième portion 8b de la bague de maintien 8 qui sera décrite ultérieurement, cette deuxième portion 8b comprenant des rainures (non représentées) qui s'étendent selon l'axe X et sont destinées à s'emboîter sur les ailettes 51 a.

Le mécanisme d'entrainement en rotation 41 met en rotation autour de l'axe X le manchon 50 par l'intermédiaire d'un deuxième engrenage 43 et d'une roue à dents 44. La roue à dents 44 comprend un évidement central qui correspond sensiblement au diamètre d6 du manchon 50, et est solidaire en rotation du manchon 50.

Le système de transmission de frappe 60 comprend un élément de frappe 61 et un mécanisme de transformation 62 qui est adapté pour convertir le mouvement de rotation fourni en sortie par le moteur 40 en un mouvement axial selon l'axe X de l'élément de frappe 61. Le mécanisme de transformation 62 comprend une came 63, un manchon 63a et un tube de frappe 64. Le tube de frappe 64 est creux et s'étend selon l'axe X entre une première extrémité 65 postérieure qui est fermée, et une deuxième extrémité 66 antérieure qui est ouverte. En outre, le tube de frappe 64 est situé dans la deuxième partie 52 postérieure du manchon 50, et le tube de frappe 64 est mobile axialement dans le manchon 50. La came 63 relie le mécanisme d'entrainement en rotation 41 à la première extrémité 65 par l'intermédiaire du manchon 63a. Le manchon 63a est, par exemple, une pièce de forme cylindrique en laiton. Le manchon 63a est adapté pour permettre un mouvement de coulissement de la came 63 lorsqu'elle transforme le mouvement de rotation du mécanisme d'entraînement en rotation 41 en un mouvement de translation du tube de frappe 64 selon l'axe X, entre une position reculée (figure 6) et une position avancée (figure 7). Le mouvement de translation selon l'axe X du tube de frappe 64 provoque à son tour le mouvement axial selon l'axe X de l'élément de frappe 61.

L'élément de frappe 61, encore appelé marteau, possède, par exemple, une forme de révolution pleine. L'élément de frappe 61 présente un diamètre sensiblement égal au diamètre interne du tube de frappe 64, et est inséré dans ce dernier. L'élément de frappe 61 est mobile axialement et en rotation dans le tube de frappe 64. Une cavité 64a est formée entre l'élément de frappe 61 et la première extrémité 65 postérieure fermée du tube de frappe 64. Des joints sur l'élément de frappe 61 permettent à la cavité 64a d'être close et de contenir une quantité fixe de gaz. Lorsque l'élément de frappe 61 se déplace axialement dans le tube de frappe 64, l'élément de frappe 61 comprime et détend alternativement le gaz qui est enfermé dans la cavité 64a, sur le principe d'un ressort pneumatique.

Le percuteur 70, encore appelé enclume, s'étend longitudinalement selon l'axe X, et comprend un corps 71, par exemple de forme cylindrique, et une tête de frappe 72 avec un diamètre qui est supérieur à celui du corps 71. Le corps 71 est inséré dans un évidement d'un manchon de blocage 73. Le manchon de blocage 73 est situé dans la deuxième partie 52 postérieure du manchon 50, en regard de l'épaulement 53 et entre la bague de maintien 8 et l'élément de frappe 61. En outre, le manchon de blocage 73 est adapté pour permettre le passage du tube de frappe 64 entre le manchon de maintien 73 et le manchon 50 lorsque le tube de frappe 64 est en position avancée (figure 7). Le manchon de blocage 73 est solidaire en rotation et en translation du manchon 50 par l'intermédiaire d'une bague circulaire. La tête de frappe 72 du percuteur 70 est située dans une cavité 15 de la bague de maintien 8 qui sera décrite ultérieurement. La tête de frappe 72 est destinée à venir entrer en collision avec la bague de maintien 8 et, dans le mode de réalisation représenté, à entrer en contact avec une première extrémité 15a de la cavité 15 présente dans la deuxième portion 8b de la bague de maintien 8. Le percuteur 70 est sollicité axialement en va-et-vient par l'élément de frappe 61 en direction du porte-outil 7 entre une position armée (figure 6), dans laquelle la tête de frappe 72 vient en appui contre le manchon de blocage 73, et une position de frappe (figure 7), dans laquelle la tête de frappe 72 heurte le porte-outil 7 lorsque celui-ci est dans une position de retrait, créant l'action de perforation.

Le porte-outil 7 est monté mobile en translation selon l'axe X par rapport au manchon 50. Le porte-outil 7 est mobile entre la position de retrait (figure 6) dans laquelle le porte-outil 7 est agencé pour être heurté par le percuteur 70, et une position de perforation (figure 7) dans laquelle le porte-outil 7 transmet la force de frappe aux matériaux à perforer par le biais du foret 2. Le porte-outil 7 comprend un dispositif de maintien 7a et un dispositif de verrouillage 7b. Le dispositif de maintien 7a est destiné à recevoir le foret 2. Pour cela, le dispositif de maintien 7a comprend la bague de maintien 8, une interface utilisateur 18 et un moyen élastique de rappel 17.

La bague de maintien 8 présente, par exemple, une forme cylindrique et s'étend longitudinalement selon l'axe X entre une première extrémité de bague 9 et une deuxième extrémité de bague 10. La bague de maintien 8 se décompose entre une première portion 8a présentant un diamètre d₁ et la deuxième portion 8b présentant un diamètre d₂ supérieur au diamètre d₁.

La première portion 8a est destinée à solidariser en rotation le foret 2 à la bague de maintien 8 et à maintenir le foret 2 dans l'axe de perçage. La première portion 8a comprend un logement 11 dans lequel se loge au moins une partie de la tige 3 du foret 2. Le logement 11 s'étend selon l'axe X entre une première extrémité frontale 12 du logement 11, par exemple confondue avec la première extrémité de bague 9, et une deuxième extrémité frontale 13. La première extrémité frontale 12 est ouverte et forme une ouverture de réception pour la tige 3 du foret 2. La deuxième extrémité frontale 13 peut être fermée et forme une limite de fond d'insertion de la tige 3 du foret 2, l'extrémité arrière 3a du foret 2 entrant en contact avec la deuxième extrémité frontale 13. La tige 3 se verrouille axialement dans le logement 11 par le dispositif de verrouillage 7b qui sera décrit ultérieurement.

Le logement 11 peut être de section hexagonale, de façon à entraîner en rotation le foret 2 par complémentarité de forme, lorsque le foret 2 est inséré dans ledit logement 11. D'autres formes complémentaires de la queue 3 du foret 2 et du logement 11 peuvent être utilisées alternativement.

La première portion 8a comprend en outre au moins un passage traversant 14, de préférence deux passages 14 traversants opposés l'un à l'autre. Chaque passage 14 permettent à un élément de verrouillage 21 appartenant au dispositif de verrouillage 7b qui sera décrit ultérieurement, de venir bloquer le foret 2 dans le logement 11, solidarisant axialement le foret 2 avec la bague de maintien 8. Les passages 14 sont, par exemple, de forme circulaire.

La deuxième portion 8b comprend la cavité 15 s'étendant selon l'axe X entre une première extrémité de cavité 15a et la deuxième extrémité de cavité 15b, la première extrémité de cavité 15a étant, par exemple, distincte de la deuxième extrémité frontale 13, et la deuxième extrémité de cavité 15b étant, par exemple, confondue avec la deuxième extrémité de bague 10.

L'interface utilisateur 18, accessible à l'utilisateur, présente par exemple une forme sensiblement cylindrique. L'interface utilisateur 18 est destinée à prolonger le boîtier autour de la bague de maintien 8. L'interface utilisateur 18 est mobile axialement entre une position de travail et une position d'insertion. L'interface utilisateur 18 comprend en outre une ouverture de réception permettant le passage de la tige 3 du foret 2.

Le moyen élastique de rappel 17 est destiné à maintenir la bague de maintien 8 immobile axialement lorsque le perforateur 1 est en position d'arrêt, afin d'augmenter un sentiment de fiabilité pour l'utilisateur. Le moyen élastique de rappel 17 est, par exemple, un ressort hélicoïdal 17. Le ressort hélicoïdal 17 est situé en regard de la première extrémité de bague 9 de la bague de maintien 8. En outre, le dispositif de maintien 7a comprend alternativement un moyen élastique de rappel complémentaire (non représenté), tel que par exemple un ressort situé entre l'interface utilisateur 18 et le manchon 50. Ce moyen de rappel complémentaire est destiné à améliorer l'immobilisation axiale de la bague de maintien 8 lorsque le perforateur 1 est en position d'arrêt.

Le dispositif de verrouillage 7b est destiné à bloquer axialement selon l'axe X le foret 2 dans la bague de maintien 8. Le dispositif de verrouillage 7b comprend au moins un élément de verrouillage 21, un organe d'arrêt 22 et un moyen élastique de rappel 23. Lors de la perforation, le dispositif de verrouillage 7b est solidaire en rotation et en translation de la bague de maintien 8. Bien que les figures 4 à 8 montrent l'utilisation de deux éléments de verrouillage 21 qui sont actionnés simultanément, d'autres modes de réalisation de l'invention peuvent n'utiliser qu'un seul élément de verrouillage 21.

Les deux éléments de verrouillage 21 sont, par exemple, en forme de bille de diamètre d₅ et sont logés dans les passages 14 de la bague de maintien 8. Les éléments de verrouillage 21 sont mobile radialement entre une position de maintien du foret 2 (figures 4, 6 et 7), dans laquelle les éléments de verrouillage 21 solidarisent le foret 2 en translation par rapport à la bague de maintien 8, et une position de libération (figure 5), dans laquelle les éléments de verrouillage 21 autorisent la séparation en translation entre le foret 2 et la bague de maintien 8. En position de maintien du foret 2, les éléments de verrouillage 21 pénètrent dans la gorge 33 de la tige 3 du foret 2 lorsque ledit foret 2 est inséré dans le logement 11. En position de libération, les éléments de verrouillage 21 se sont déplacés radialement hors de la gorge 33 de la tige 3 du foret 2 et pénètrent dans l'organe d'arrêt 22.

L'organe d'arrêt 22 est, par exemple, situé autour de la première portion 8a de la bague de maintien 8. L'organe d'arrêt 22 présente une forme générale d'anneau comprenant au moins une première partie présentant un diamètre d₃ et une deuxième partie présentant un diamètre d₄, le diamètre d₄ étant légèrement supérieur au diamètre d₁ de la première portion 8a de la bague de maintien 8 et le diamètre d₃ étant sensiblement égal au diamètre d₄ additionné du diamètre d₅ des éléments de verrouillage 21. L'organe d'arrêt 22 est mobile axialement sur l'axe X entre, d'une part, une position de verrouillage (figures 4, 6 et 7) et une position de déverrouillage (figure 5).

Lorsque l'organe d'arrêt 22 est en position de verrouillage, la deuxième partie de l'organe d'arrêt 22 est située en regard des éléments de verrouillage 21 et empêche les éléments de verrouillage 21 de se déplacer radialement vers l'extérieur, maintenant ainsi les éléments de verrouillage 21 dans leur position de maintien.

Lorsque l'organe d'arrêt 22 est en position de déverrouillage, la première partie de l'organe d'arrêt 22 est située en regard des éléments de verrouillage 21 et autorise les éléments de verrouillage 21 à se déplacer radialement vers l'extérieur, faisant ainsi passer ces éléments de verrouillage 21 de leur position de maintien du foret 2 vers leur position de libération du foret 2.

Le moyen élastique de rappel 23 est destiné à ramener et à maintenir l'organe d'arrêt 22 dans sa position de verrouillage. Le moyen élastique de rappel 23 est, par exemple, un ressort hélicoïdal 23. Le ressort hélicoïdal 23 est situé autour de la première portion 8a de la bague de maintien 8 entre l'organe d'arrêt 22 et la deuxième extrémité frontale 13 du logement 11.

Alternativement, le perforateur 1 peut comprendre un mécanisme interne de perforation à roue basé sur un système de bielle-manivelle.

Le perforateur 1 peut posséder une fonction perçage sans percussion. Pour cela, le perforateur 1 comprend un ergot (non représenté) qui, lorsque le perforateur 1 est en fonction perçage sans percussion, bloque le déplacement du manchon 50 dans sa position de non-percussion. Le mécanisme d'entrainement en rotation 41 ne joue plus qu'un rôle de réducteur de la vitesse de rotation du moteur 40 et ne fait plus osciller la came 63. Le foret 2, par l'intermédiaire de la bague de maintien 8, est sollicité en rotation autour de l'axe X, mais n'est pas sollicité en translation parallèlement à l'axe X. Le perçage du matériau se fait uniquement par la rotation du foret 2.

Le perforateur 1 peut posséder en outre une fonction de vissage. Pour cela, le bouton déclencheur 6a du perforateur 1 est une gâchette progressive, ladite gâchette progressive étant adaptée pour permettre de moduler la vitesse de rotation du moteur 40 et donc de moduler la vitesse de rotation de l'outil 2, adapté au vissage, solidaire de la bague de maintien 8.

Le perforateur 1 qui vient d'être décrit fonctionne comme suit.

Lorsque l'utilisateur utilise le perforateur 1, il insère le foret 2 dans le logement 11. Pour cela, l'utilisateur déplace l'interface utilisateur 18 de sa position de travail (figure 4) vers sa position d'insertion (figure 5). L'interface utilisateur 18 entraîne alors le déplacement selon l'axe X de l'organe d'arrêt 22, à l'encontre de la sollicitation élastique du ressort 23, de la position de verrouillage de l'organe d'arrêt 22 (figure 4) à la position de déverrouillage de cet organe d'arrêt 22 (figure 5). Les éléments de verrouillage 21 se déplacent alors radialement vers l'extérieur de leur position de maintien (figure 4) vers leur position de libération (figure 5) permettant l'insertion du foret 2 dans le logement 11 de la bague de maintien 8. Lorsque l'extrémité arrière 3a du foret 2 entre en contact avec la deuxième extrémité frontale 13 du logement 13, l'utilisateur relâche l'interface utilisateur 18 qui reprend sa position de travail. L'organe d'arrêt 22 est alors sollicité élastiquement par le ressort 23 vers sa position de verrouillage et les éléments de verrouillage 21 viennent s'insérer dans la gorge 22 du foret 2. Le foret 2 étant alors maintenu solidairement en translation dans la bague de maintien 8 par les éléments de verrouillage en position de verrouillage, et maintenu solidairement en rotation par rapport à la première portion 8a de la bague de maintien 8, par complémentarité de forme.

L'utilisateur appuie alors l'extrémité du foret 2 contre le matériau à perforer, ce qui déplace axialement le manchon 50 de sa position de non-percussion à sa position de percussion. L'utilisateur appuie sur le bouton déclencheur 6a permettant d'alimenter le moteur 40 en électricité. Le moteur 40 génère en sortie un mouvement de rotation qui va être transmis au mécanisme d'entrainement en rotation 41. Le mécanisme d'entrainement en rotation 41 entraine alors en rotation le manchon 50, par l'intermédiaire de la roue 44, et le manchon 50 entraine lui-même en rotation la bague de maintien 8 et le percuteur 70. La bague de maintien entraîne à son tour en rotation le foret 2.

Le mécanisme de transformation 62 convertit le mouvement de rotation fourni en sortie par le moteur 40 en un mouvement axial selon l'axe X de l'élément de frappe 61. L'élément de frappe 61 vient en va-et-vient heurter périodiquement le percuteur 70. Lorsque l'élément de frappe 61 heurte le percuteur 70, l'élément de frappe 61 déplace axialement le percuteur 70 de sa position armée (figure 6) à sa position de frappe (figure 7). La tête de frappe 72 du percuteur 70, située dans la cavité 15 de la bague de maintien 8, heurte le porte-outil 7. Sous l'action du percuteur 70, le porte-outil 7 se déplace axialement selon l'axe X de sa position de retrait (figure 6) à sa position de perforation pour percer un matériau (figure 7).

Puis, la force exercée par le foret 2 contre le matériau à perforer déplace axialement le foret 2 de sa position de perforation (figure 7) vers sa position de retrait (figure 6). Le foret 2 entraîne à son tour le percuteur 70 de sa position de frappe (figure 7) à sa position armée (figure 6). Le percuteur 70 est alors prêt à être de nouveau heurté par l'élément de frappe 61 créant ainsi le mouvement de perforation.

Lorsque l'utilisateur a terminé la perforation d'un matériau avec le perforateur 1, il relâche le bouton déclencheur 6a. Le moteur 40 n'est plus alimenté en électricité et stoppe son mouvement de rotation selon l'axe X. L'arrêt du moteur 40 entraîne l'immobilisation de l'ensemble des pièces du mécanisme interne du perforateur 1.

L'utilisateur recule le perforateur 1 de façon à ce que le foret 2 ne soit plus en contact avec le matériau perforé et le ressort à lame 55 sollicite élastiquement le manchon 50 vers sa position de non-perforation (figures 4 et 5).

Lorsque l'utilisateur souhaite retirer le foret 2 du porte-outil 7, il déplace l'interface utilisateur 18 de sa position de travail (figure 4) vers sa position d'insertion (figure 5). L'interface utilisateur 18 entraîne alors le déplacement selon l'axe X de l'organe d'arrêt 22, à l'encontre de la sollicitation élastique du ressort 23, de la position de verrouillage de l'organe d'arrêt 22 (figure 4) à la position de déverrouillage de cet organe d'arrêt 22 (figure 5). Les éléments de verrouillage 21 se déplacent alors radialement vers l'extérieur de leur position de maintien (figure 4) vers leur position de libération (figure 5) permettant la libération du foret 2 du logement 11 de la bague de maintien 8. Lorsque le foret 2 est entièrement retiré du logement 11, l'utilisateur relâche l'interface utilisateur 18 qui reprend sa position de travail. L'organe d'arrêt 22 est alors sollicité élastiquement par le ressort 23 vers sa position de verrouillage et les éléments de verrouillage 21 viennent prendre leur position de maintien.

Les références supplémentaires qui sont indiquées dans les figures 8a à 8c et 9, sont les suivantes :
80 paliers de support du manchon 50, permettant sa rotation par rapport au boîtier 5, et sa translation pour passer de sa position de perçage sans percussion à sa position de perçage avec percussion
81 cale limitant la course de translation du manchon 50 parallèlement à l'axe X, pour passer de sa position de perçage sans percussion à sa position de perçage avec percussion
19 système d'ergot et de gorge du porte-outil 7 et du manchon 50, limitant la course de translation du porte-outil 7 par rapport au manchon 50 lors d'un fonctionnement avec percussion
l₁ longueur maximale de la course de translation du porte-outil 7 par rapport au manchon 50 lors d'un fonctionnement avec percussion
l₂ longueur de la course de translation du manchon 50 par rapport au boîtier 5, pour passer de sa position de perçage sans percussion à sa position de perçage avec percussion
5a prolongement antérieur du boîtier 5
5b glissières rectilignes parallèles à l'axe X, agencées sur le prolongement 5a du boîtier 5
90 moyen élastique de rappel, par exemple un ressort hélicoïdal disposé radialement entre le porte-outil 7 et le prolongement 5a du boîtier 5
18a partie de centrale de l'interface utilisateur 18
18b partie périphérique de l'interface utilisateur 18
18c unité d'éclairage, par exemple une ou plusieurs diodes électroluminescentes
18d liaison électrique déformable, par exemples des fils électriques souples
18e guides de l'interface utilisateur 18, pénétrant dans les glissières 5b
18f lentille divergente
l₃ longueur maximale de translation de l'interface utilisateur 18, parallèlement à l'axe X
100 unité de contrôle et d'alimentation électrique

Le système d'ergot et de gorge 19 détermine la longueur maximale l₁. Par exemple, la longueur l₁ peut être égale à 3,0 mm (millimètre).

La cale 81 avec un segment du manchon 50 sur lequel le diamètre externe de ce dernier est réduit, détermine la longueur l₂. Par exemple, la longueur l₂ peut être égale à 3,5 mm.

Les glissières 5b déterminent la longueur maximale l₃ qui est disponible pour la translation de l'interface utilisateur 18.

La partie centrale 18a et la partie périphérique 18b de l'interface utilisateur 18 forment conjointement l'ensemble de base de cette interface utilisateur. L'ensemble de base peut avoir une forme générale de coiffe, sensiblement à symétrie de révolution autour de l'axe X pour fermer le boîtier 5 vers l'avant du perforateur 1. La partie centrale 18a possède une ouverture centrale par laquelle déborde le foret 2 lorsqu'il est monté sur le porte-outil 7, avec une longueur libre du foret 2 qui est suffisante pour le fonctionnement du perforateur 1 avec ou sans fonction de percussion. Eventuellement, un joint peut être disposé autour de cette ouverture, entre le foret 2 et la partie centrale 18a, ou entre le porte-outil 7 et la partie centrale 18a, pour éviter que des poussières pénètrent dans le perforateur 1. Toutefois, un tel joint n'entrave pas la rotation du foret 2 ni sa translation parallèlement à l'axe X.

Les glissières 5b, les guides 18e et le ressort hélicoïdal 90 forment ensemble un mécanisme de liaison qui retient l'interface utilisateur 18 sur le boîtier 5, en empêchant que l'interface utilisateur 18 puisse tourner autour de l'axe X. Le ressort hélicoïdal 90 peut être disposé selon l'axe de rotation X, autour du porte-outil 7 avec un intervalle de séparation radiale entre tous les éléments du porte-outil 7 et le ressort 90.

L'interface utilisateur 18 est ainsi portée par le boîtier 5, en pouvant être reculée par rapport au boîtier 5, parallèlement à l'axe X mais sans rotation autour de cet axe X, sur une distance qui est inférieure ou égale à la longueur maximale de translation l₃. Le ressort hélicoïdal 90 prend appui sur le boîtier 5 pour pousser l'interface utilisateur 18 vers sa position la plus antérieure, correspondant aux guides 18e qui sont en butée contre les extrémités antérieures des glissières 5b. On entend par «antérieure» la partie d'un composant qui est orientée vers la pointe du foret 2, selon l'axe X.

Selon l'invention, la position la plus antérieure de l'interface utilisateur 18, dite position de travail, est telle que cette interface utilisateur ne soit pas en contact avec l'organe d'arrêt 22 quelques soient les positions en translation du manchon 50 par rapport au boîtier 5, et du porte-outil 7 par rapport au manchon 50, lorsque l'organe d'arrêt 22 est en position de verrouillage. On rappelle que la position de verrouillage de l'organe d'arrêt 22 est sa position la plus antérieure par rapport à la bague de maintien 8.

La figure 8a correspond au perforateur 1 dans la fonction de perçage sans perforation. Le manchon 50 est alors dans sa position la plus antérieure, et le porte-outil 7 est dans sa position la plus reculée à l'intérieur du manchon 50, par rapport à ce dernier. L'écart e, qui existe alors entre l'interface utilisateur 18 dans la position de travail, et l'organe d'arrêt 22 dans la position de verrouillage, doit être non-nul, pour éviter que l'organe d'arrêt 22 qui est entraîné en rotation frotte sur l'interface utilisateur 18. L'écart e peut alors être de quelques dixièmes de millimètres, par exemple.

Il peut être préférable que la longueur maximale l₃ soit suffisante pour que l'interface utilisateur 18 puisse être reculée à l'encontre du ressort hélicoïdal 90, jusqu'à entrer en contact avec l'organe d'arrêt 22 et repousser ce dernier de la position de verrouillage jusque dans la position de déverrouillage, quelques soient les positions du manchon 50 et du porte-outil 7 le long de l'axe X.

La figure 8b correspond à la figure 8a, mais après que la fonction de percussion a été enclenchée et que l'utilisateur a commencé à appuyer la pointe du foret 2 sur le matériau à perforer. Le manchon 50 a alors reculé de la longueur l₂. Le porte-outil 7, porté par le manchon 50, a reculé de la même longueur l₂ par rapport au boîtier 5. Etant donné que le ressort hélicoïdal 90 prend appui sur le boîtier 5, et non sur le porte-outil 7, la position de l'interface utilisateur 18 est restée inchangée, correspondant à la même position de travail. L'écart e entre l'interface d'utilisateur 18 et l'organe d'arrêt 22 est donc devenue supérieure à l₂, ces deux composants restant donc sans contact entre eux. Pour que l'interface utilisateur 18 permette encore d'amener l'organe d'arrêt 22 dans la position de déverrouillage, la longueur maximale l₃ peut être préférablement supérieure à la somme de la longueur l₂ avec la distance de séparation entre les positions de verrouillage et de déverrouillage de l'organe d'arrêt 22 le long de la bague de maintien 8, et avec l'écart e qui existe pour la configuration de la figure 8a. Toutefois, cette condition de la longueur maximale l₃ qui est supérieure à la somme de la longueur l₂ avec la distance de séparation entre les positions de verrouillage et de déverrouillage de l'organe d'arrêt 22, n'est pas indispensable lorsque la traction qui est opérée par l'utilisateur sur le foret 2 pour le retirer de la machine de perçage, ramène vers l'avant le manchon 50, le porte-outil 7 par rapport au manchon 50, ou bien les deux.

Sur la figure 8b, le porte-outil 7 est en position de retrait, et l'élément de frappe 61 est en position armée.

La figure 8c correspond à la figure 8b, la fonction de percussion restant enclenchée mais l'élément de frappe 61 étant maintenant en position de frappe. Sur la figure 8c, le porte-outil 7 est en position d'avancée maximale, correspondant à son avancée maximale par rapport au manchon 50. Le porte-outil 7 est donc translaté de nouveau vers l'avant, de la longueur l₁. Adopter une valeur pour la longueur l₂ qui est supérieure à la longueur maximale l₁ assure qu'en fonctionnement avec percussion, l'interface d'utilisateur 18 ne sera pas en contact avec l'organe d'arrêt 22 pour la position d'avancée maximale du porte-outil 7, si un tel contact n'existait pas avant que la fonction de percussion soit enclenchée. Pour les valeurs numériques citées en exemple, l'écart e en position de perforation du manchon 50, entre l'interface d'utilisateur 18 dans la position de travail et l'organe d'arrêt 22 dans la position de verrouillage, est supérieure l₂-l₁=0,5 mm, et est minimale lorsque le porte-outil 7 est en position d'avancée maximale.

La partie périphérique 18b de l'interface utilisateur 18 peut être conçue pour faciliter certains modes de préhension du perforateur 1 par l'utilisateur. Une telle fonction de préhension est facilitée par le blocage de toute rotation de l'interface utilisateur 18 autour de l'axe X.

La partie centrale 18a de l'interface utilisateur 18 peut être le support de fonctions additionnelles, notamment de telles fonctions qui nécessitent des liaisons électriques avec l'unité de contrôle et l'alimentation 100. Cette unité 100 peut être située de façon fixe à un endroit quelconque à l'intérieur du boîtier 5. Bien que l'unité 100 soit située en dessous du porte-outil 7 sur les figures 8a à 8c, il peut être placé alternativement au dessus du porte-outil 7 et/ou du manchon 50 à l'intérieur du boîtier 5, pour l'orientation de la machine de perçage qui est utilisée dans ces figures. Les composants qui sont portés par l'interface utilisateur 18 et qui produisent ces fonctions additionnelles peuvent être connectés électriquement à l'unité 100 par les fils électriques souples 18d. De telles connections électriques, qui sont simples, sont aussi facilitées par le blocage de toute rotation de l'interface utilisateur 18 autour de l'axe X.

La figure 9 représente un exemple de réalisation de la partie centrale 18a de l'interface utilisateur 18. Elle peut être constituée de matériau transparent, du type polycarbonate. Les guides 18e, par exemple deux guides 18e, sont préférablement répartis régulièrement le long de la circonférence périphérique de la partie centrale 18a. Trois diodes électroluminescentes 18c peuvent être réparties sous la face antérieure de la partie centrale 18a, pour éclairer la zone du matériau qui est en train d'être perforée. Elles peuvent être connectées électriquement en série par rapport à l'unité de contrôle et d'alimentation 100. En outre, la face antérieure de la partie centrale 18a peut former une lentille divergente 18f devant chaque diode électroluminescente 18c, pour produire un faisceau lumineux de forme appropriée avec la lumière qui est émise par chacune des diodes électroluminescentes 18c. Avantageusement, une telle fonction de lentille divergente peut être produite par une structure de Fresnel qui est constituée sur la face antérieure de la partie centrale 18a.

Alternativement ou en plus des diodes électroluminescentes 18c qui sont dédiées à l'éclairage de la zone de perçage, l'interface utilisateur 18 peut être munie d'un détecteur de distance, pour mesurer la distance entre la face antérieure de la partie centrale 18a et la surface du matériau en cours de perçage. Une telle mesure de distance peut être utile pour communiquer à l'utilisateur la profondeur de pénétration du foret dans le matériau qui est en train d'être percé. Le détecteur de distance utilisé peut être d'un des types déjà connus et disponibles commercialement, tels qu'un détecteur optique de distance, quelque soit son principe de mesure, un détecteur de distance fonctionnant par émission et détection d'ultrasons, ou un détecteur de distance fonctionnant par émission et détection de champ électromagnétique. D'autres détecteurs peuvent aussi être intégrés à l'interface utilisateur 18, tels qu'un détecteur de la présence de fils électriques ou de parties métalliques dans la zone du perçage, ou encore un thermocouple qui est disposé pour mesurer une température du foret 2, en tant que donnée relative au fonctionnement du perforateur. De même, il est possible d'intégrer un détecteur optique dans la partie centrale 18a de l'interface utilisateur 18, qui permette de mesurer la vitesse de rotation du foret 2 autour de l'axe X.

Des afficheurs peuvent aussi être intégrés à l'interface utilisateur, par exemple pour afficher les valeurs mesurées par les détecteurs qui viennent d'être cités. Dans une version ergonomique, des diodes électroluminescentes monochromes ou multicolores peuvent être utilisées pour communiquer à l'utilisateur certaines informations qui sont déduites des mesures réalisées par les détecteurs intégrés dans l'interface utilisateur.

L'invention, qui concerne l'interface utilisateur, a été décrite en détail pour un perforateur dans lequel le porte-outil peut avoir une composante de mouvement par translation parallèlement à l'axe de rotation du foret, et cette composante de mouvement par translation est alors transmise au moins partiellement au foret par le porte-outil. Toutefois, l'invention peut être appliquée plus simplement à un outil de perçage pour lequel le porte-outil est dépourvu de mouvement de translation.

En outre, l'Homme du métier pourra introduire de nombreuses adaptations par rapport à la description en détail qui a été fournie, tout en conservant certains au moins des avantages qui ont été cités. En particulier, la forme des composants mécaniques peut être modifiée, et certains de ces composants peuvent être réalisés en plusieurs pièces élémentaires, d'une façon équivalente sans faire preuve d'activité inventive. Une telle réalisation en plusieurs pièces élémentaires qui sont combinées entre elles peut être mise en oeuvre notamment pour le porte-outil, et particulièrement lorsque celui-ci peut être animé d'un mouvement de translation.

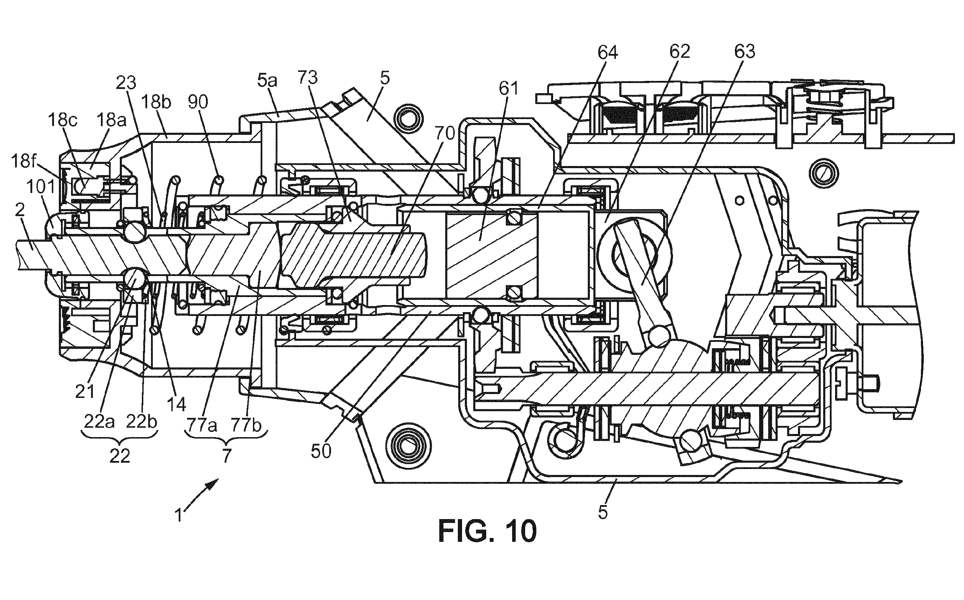

La figure 10 illustre une réalisation particulière de l'invention, avec les modifications suivantes par rapport à la description précédente :
- le porte outil 7 est constitué de deux pièces 77a et 77b, notamment parce que l'usinage de ces pièces séparées peut être facilité, et leur coût de fabrication réduit en conséquence ;
- l'organe d'arrêt 22 est remplacé par un tube d'arrêt 22a, combiné avec une rondelle d'arrêt 22b et des passages 14 à travers la bague de maintien du porte-outil 7 qui sont allongés selon l'axe X. Une telle combinaison permet notamment un autoclipsage du foret 2 sur le porte-outil 7, lorsque le foret 2 est enfoncé dans le porte-outil 7. Il n'est alors pas nécessaire d'actionner l'interface utilisateur 18 pour monter le foret sur le porte-outil 7. Autrement dit, l'interface utilisateur 18 reste continuellement dans sa position de travail pendant le montage du foret 2 par enfoncement dans le porte-outil 7, mais le maniement de l'interface utilisateur 18 pour retirer le foret est identique à celui déjà décrit. Il est à noter qu'un autoclipsage du foret 2 lors de son montage sur le porte-outil 7 peut aussi être obtenu avec le mode de réalisation des figures 4 à 8 pour l'organe d'arrêt 22 en une seule pièce, en ajustant convenablement les dimensions de la partie conique de cette pièce ainsi que celles des éléments de verrouillage 21 ;
- un joint antérieur 101 est ajouté sur le foret 2, pour procurer une étanchéité entre le foret 2 et la partie centrale 18a de l'interface utilisateur 18. Dans ce cas, l'étanchéité au moins partielle qui est ainsi procurée est compatible avec la rotation du foret 2 alors que l'interface utilisateur 18 reste bloquée en rotation. Elle est aussi compatible avec le déplacement de l'interface utilisateur 18 par translation parallèlement à l'axe X, pour actionner le dispositif de verrouillage 7b de la façon objet de la présente invention.

## Revendications

1. Machine de perçage (1) adaptée pour mettre en rotation un foret (2) et déplacer simultanément le foret parallèlement à un axe de la rotation (X), comprenant un boîtier (5), un mécanisme d'entraînement en rotation (41), un porte-outil (7) adapté pour transmettre au foret au moins la rotation produite par le mécanisme d'entraînement, une interface utilisateur (18) et un mécanisme de liaison adapté pour retenir l'interface utilisateur sur le boîtier,
le porte-outil (7) comprenant un organe d'arrêt (22) mobile réversiblement et axialement par rapport audit porte-outil entre une position de verrouillage du foret dans laquelle le foret (2) ne peut pas être extrait du porte-outil, et une position de déverrouillage dans laquelle le foret peut être extrait du porte-outil, la position de verrouillage étant décalée en direction de la pointe du foret par rapport à la position de déverrouillage,
l'interface utilisateur (18) étant mobile en translation par rapport au boîtier (5) parallèlement à l'axe de rotation (X), et agencée pour déplacer l'organe d'arrêt (22) à partir de la position de verrouillage vers la position de déverrouillage,
dans laquelle le mécanisme de liaison qui retient l'interface utilisateur (18) sur le boîtier est adapté pour empêcher un entraînement en rotation de ladite interface utilisateur par le foret (2) ou le porte-outil (7),
**caractérisée en ce que** le mécanisme de liaison qui retient l'interface utilisateur (18) sur le boîtier (5) comprend un moyen élastique de rappel (90), qui est disposé pour maintenir réversiblement l'interface utilisateur dans une position de travail à distance de l'organe d'arrêt (22) dans la position de verrouillage, le long de l'axe de rotation (X) en direction de la pointe du foret (2) monté sur le porte-outil (7), en permanence pendant le fonctionnement de la machine de perçage (1) mettant en oeuvre la rotation du foret, la translation du foret, ou simultanément la rotation et la translation du foret.

2. Machine de perçage selon la revendication 1, du type outil portatif, notamment perceuse à percussion, perforateur, visseuse ou outil combinant au moins deux fonctions quelconques sélectionnées parmi visseuse, perceuse à percussion et perforateur.

3. Machine de perçage selon la revendication 1 ou 2, adaptée pour que pendant un fonctionnement qui met en oeuvre la translation du foret (2), un mouvement du porte-outil (7) par rapport au boîtier (5) comprend une composante de mouvement par translation parallèlement à l'axe de rotation (X), et ledit porte-outil transmet au moins en partie la composante de mouvement par translation au foret.

4. Machine de perçage selon la revendication 3, dans laquelle le porte-outil (7) se déplace le long de l'axe de rotation (X) entre une position de retrait et une position d'avancée maximale en direction de la pointe du foret (2), lors d'un fonctionnement de la machine de perçage (1) mettant en oeuvre la translation du foret,
et le mécanisme de liaison qui retient l'interface utilisateur (18) sur le boîtier (5) est adapté pour maintenir un écart d'au moins 0,1 mm le long de l'axe de rotation (X), entre l'organe d'arrêt (22) dans la position de verrouillage lorsque le porte-outil (7) est dans la position d'avancée maximale, et l'interface utilisateur restant dans une position de travail.

5. Machine de perçage selon l'une quelconque des revendications précédentes, dans laquelle l'interface utilisateur (18) possède une forme de coiffe et est disposée en avant du boîtier (5), en entourant au moins partiellement le foret monté sur le porte-outil (7).

6. Machine de perçage selon l'une quelconque des revendications précédentes, dans laquelle l'interface utilisateur (18) comprend un ensemble de base participant au mécanisme qui retient ladite interface utilisateur (18) au boîtier (5), et comprend aussi des éléments fonctionnels portés par l'ensemble de base, lesdits éléments fonctionnels étant sélectionnés parmi des unités d'éclairage, des capteurs et des unités d'affichage dédiés à communiquer à un utilisateur de la machine de perçage (1) des données relatives au fonctionnement de ladite machine, à une position ou une orientation du foret par rapport à une surface d'un matériau en cours de perçage, à des éléments présents dans le matériau, ou à plusieurs de ces données.

7. Machine de perçage selon la revendication 6, dans laquelle certains des éléments fonctionnels comprennent au moins une diode électroluminescente (18c) portée par l'ensemble de base pour produire un faisceau d'éclairage en direction de la pointe du foret (2) monté sur le porte-outil (7).

8. Machine de perçage selon la revendication 7, dans laquelle l'interface utilisateur (18) comprend en outre au moins une lentille divergente (18f), notamment du type lentille de Fresnel, adaptée pour modifier une forme du faisceau d'éclairage produit par ladite au moins une diode électroluminescente (18c).

9. Machine de perçage selon l'une quelconque des revendications 6 à 8, dans laquelle les éléments fonctionnels sont connectés par des liaisons électriques déformables (18d), par exemple par des fils électriques souples, à une unité de contrôle et d'alimentation électrique (100) qui est fixe par rapport au boitier (5).
